# EUROPEAN PATENT APPLICATION

(11) **EP 4 588 833 A1**
(43) Date of publication of application: **23.07.2025**
(21) Application number: 24153034.4
(22) Date of filing: 22.01.2024
(51) Int. Cl.: B65G 1/04, B65G 1/137

(54) **A STORAGE SYSTEM**

(71) Applicant: AUTOSTORE TECHNOLOGY AS, 5578 Nedre Vats (NO)
(72) Inventor: Myrbakken, Joakim A, 5578 Nedre Vats (NO)
(74) Representative: Kilburn & Strode LLP

(57) **Abstract**

The disclosure relates to a storage system for storing storage containers, the storage system comprising: a plurality of vertical storage columns, each vertical storage column configured to accommodate a plurality of storage containers in a vertical stack; a horizontal rail system arranged above the vertical storage columns, configured to support a vehicle to travel on the rail system to insert and remove storage containers from the vertical storage columns; and an inspection cell located in a vertical storage column and configured to obtain inspection data from a storage container positioned in the inspection cell.

## Description

### TECHNICAL FIELD

The disclosure relates to a storage system. More particularly, it relates to a storage system for storing storage containers and to a method for inspecting a storage container.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The storage containers may need to be inspected from time to time. This could be to determine the status of the container, to check or to determine which goods are stored in a given storage container, to check the condition of a container, or to inspect the container in other ways.

Unlike in traditional systems where containers are accessed from shelves by workers, it is not possible for a worker to access containers for inspection whilst the containers are in the grid. Therefore container-handling vehicles are used to move containers to a port from which the container can be removed from the system and inspected by a worker. It is desirable to provide quick and simple container inspection.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a side view of storage system of the present disclosure with an inspection cell located in a vertical storage column;
Fig. 6A shows a side view of the system of Fig. 5 with the robotic container-handling vehicle approaching the vertical storage column having the inspection cell;
Fig. 6B shows a side view of the system of Fig. 5 with the robotic container-handling vehicle lowering a container into the inspection cell;
Fig. 6C shows a side view of the system of Fig. 5 with the robotic container-handling vehicle releasing the container in the inspection cell;
Fig. 6D shows a side view of the system of Fig. 5 with the robotic container-handling vehicle removing the container from the inspection cell; and
Fig. 7 shows a flow chart of a method for inspecting a container in an inspection cell.

### DETAILED DESCRIPTION

In overview, the disclosure relates to providing an inspection cell within the grid of a storage and retrieval system. The grid includes a number of stacking columns for stacking the bins vertically. The inspection cell is positioned in a stacking column. A storage container, or bin, is moved to the inspection cell by a robotic container-handling vehicle, referred to as a robot. Once in the inspection cell, the bin is inspected. The inspection cell has inbuilt means for inspecting the bin and obtaining data, or information, about the bin. In this way, the bin can be inspected without the bin having to leave the grid.

In some examples the inspection cell includes a load cell which is configured to weigh a bin which is positioned in the inspection cell. In some examples the inspection cell has a scanner for scanning a bar code on the bin. In some examples, the inspection cell has a camera for capturing an image of the contents of the bin. The inspection cell is located near the top or upper end of the vertical column. This means the container only needs to be lowered a short distance by the robot to the inspection cell.

By providing the inspection cell within the grid, bin container can be inspected without needing to be removed from the grid. In known systems, the bin is inspected external to the storage system. To do this, the bin must be moved to a port, removed from the grid and inspected by a worker. In the present disclosure the container can be inspected whilst in the grid and without the need for a worker to manually perform the inspection.

### Automated storage and retrieval system overview

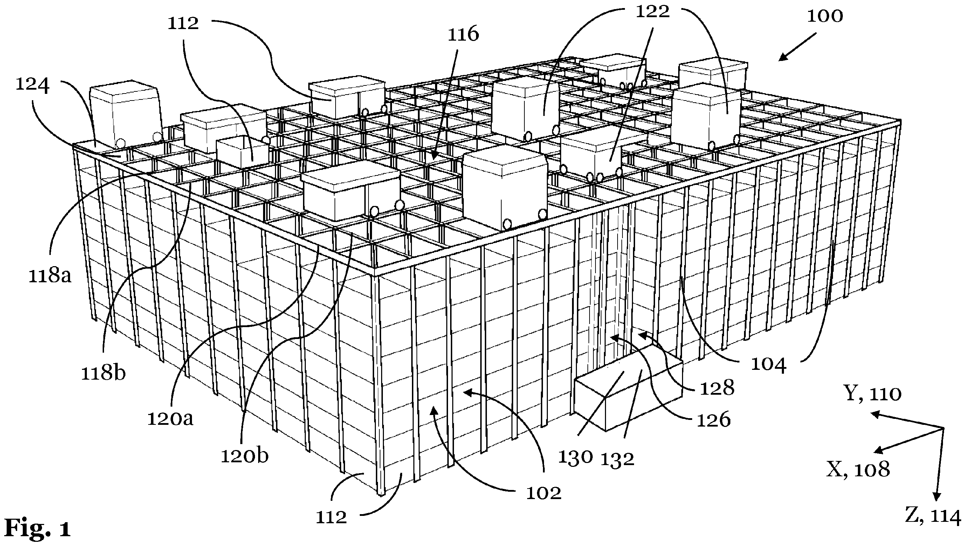

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

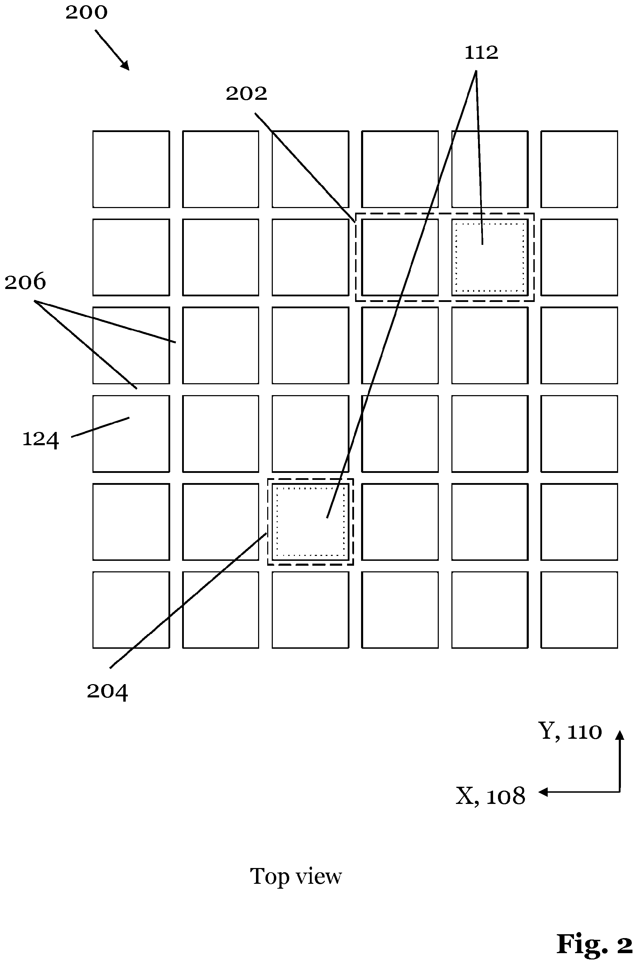

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

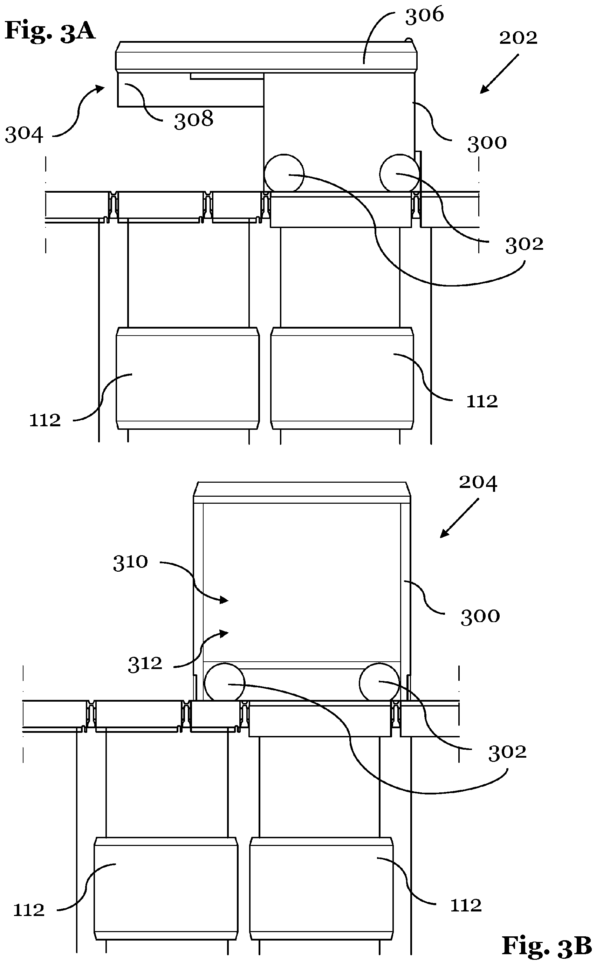

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

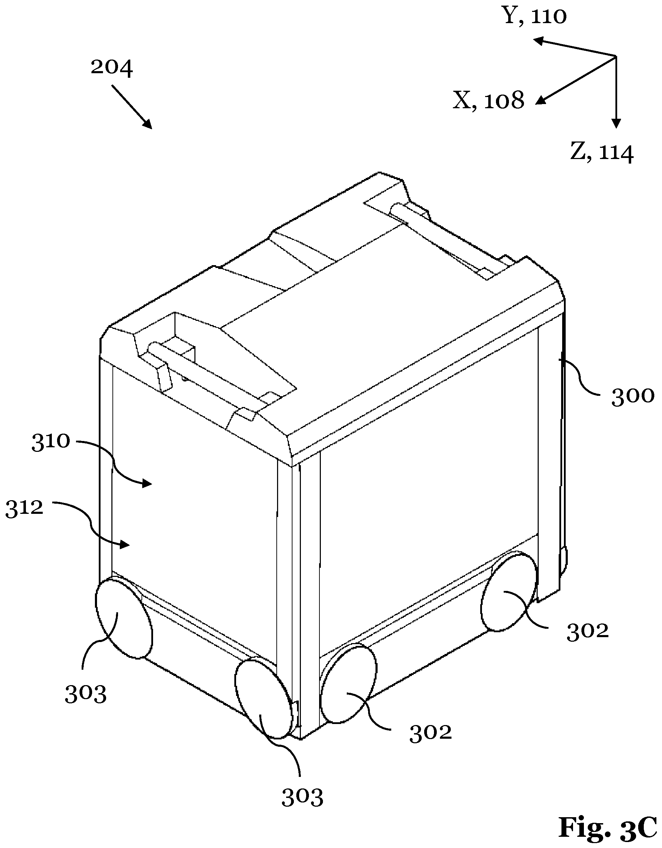

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

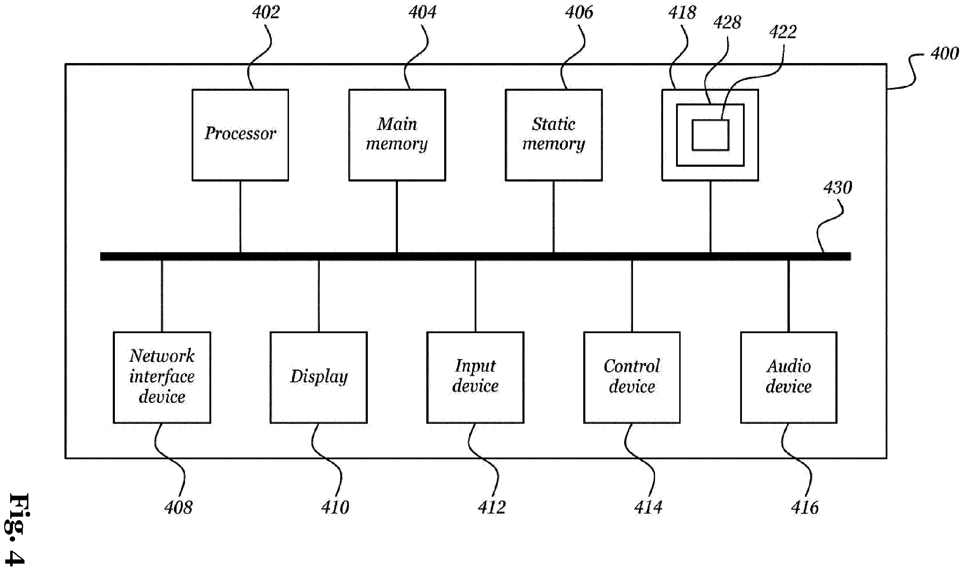

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

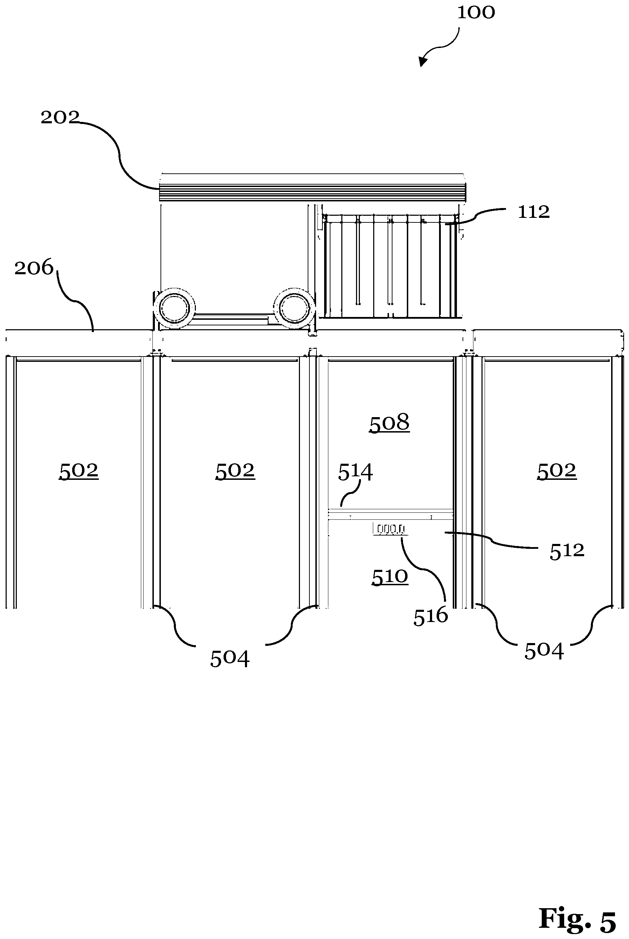

Fig. 5 shows a side view of a grid 100 of the present disclosure. The rails 206 are positioned on a plurality of columns 504 which define a plurality of vertical storage columns 502. Each vertical storage column 502 can store a plurality of bins (not shown) in a stacked configuration.

A robot 202 is located on the rails 206 and configured to: remove bins from the vertical storage columns, to move bins across the top of the grid, and lower bins into the vertical storage columns. The robot 202 shown in Figs. 5 to 10 is a cantilever type robot, however the disclosure also relates to an internal cavity type robot. The robot is carrying a bin 112.

The grid in Fig. 5 has an inspection cell 508. The inspection cell 508 is located in a vertical storage column 510. The vertical storage column 510 which includes the inspection cell 508 is not used for stacking and storing containers. The inspection cell is described as an in-grid inspection cell, since it is located within the storage grid.

The inspection cell 508 includes a shelf 512. The shelf 512 is configured to support the weight of a container. The shelf is positioned towards the top of the vertical storage column 510. It is positioned in the upper half of the storage column, in some embodiments in the upper quarter, or upper tenth of the storage column.

For a system configured to store and remove bins having a certain height, the shelf is positioned below the rail system by a distance of twice the bin height or less. This means than bins placed in the inspection cell are positioned near to the top of the column (close to the rail on which the robots move) but the top of the bins does not protrude above the rails. By providing inspection cell in the upper portion of the vertical storage column, the cell is relatively close to the rail system, and therefore the container only needs to be lowered a short distance from the robot to the cell when being inserted to the cell. This will be explained in more detail below.

The inspection cell 508 has means for inspecting a bin positioned in the cell by obtaining data about the bin. Different means for inspecting the bin can be used for obtaining different information about the bin. The inspection means obtain inspection data from the container. The information data includes information about the container. The information is sent from the inspection cell to a central server.

In the embodiment in Fig. 5, the inspection cell includes a load cell for weighing the container. The load cell includes a weighing scale having a plate 514 on the shelf 512, and a display 516 for displaying the weight of an object resting on the plate 514. In other embodiments there is no display.

The load cell calculates the weight of the bin located in the load cell. In some embodiments the weighing scale is an electronic weighing scale. In embodiments with a display, the weight of the container is displayed on the display. In some embodiments, the inspection cell is located at the edge of the grid and visible to a worker on the external side of the grid who can take a note of the weight displayed on the display 516.

In some embodiments the load cell determines the weight of the bin and sends the weight of the bin to a central controller, such as processing system 400. It sends data comprising the weight of the bin to the processing system 400 over a wired or wireless connection. The wireless connection may be, for example, Bluetooth ^{™} or WiFi ^{™}.

The central controller or processing system 400 may store the received weight in a memory. The weight may be stored along with an identification of the bin, for example in a database. In this way the known weight of the bin can be tracked. When the bin is moved around the system by the robots, the weight is known. This information could be used in determining where in a vertical storage column a bin is stored. For example, the system may determine that a bin over a certain threshold weight is not stacked at the top of a vertical storage column.

The weight can also be used to determine the contents of the bin, for example the goods located in the bin. The processing system 400 could compare the weight of the bin received from the load cell to an expected weight of the bin based on a combination of the recorded goods in the bin and the recorded weights of the goods stored in a database on the processing system. To do this the processing system, or the processor, sum totals the all of the recorded weights for the recoded goods in the bin. If the received/measured weight is within a threshold range of the expected weight, the system determines that the bin is loaded as expected. If the received weight is outside of a threshold range of the expected weight, the system determines that the bin is not loaded as expected. In some examples, this triggers an instruction message for a robot to remove the container from the inspection cell and transfer the container to a port. The bin is then removed from the grid via the port. The contents of the bin can be determined and recorded by a worker once the bin is removed from the grid. In other examples, if it is determined that the bin is not loaded as expected, an instruction message may be sent to the inspection cell to capture an image of the contents of the bin. Inspection cells configured to capture an image of a bin are discussed below.

The inspection cell may comprise other means for inspecting a bin positioned in the cell in addition to, or instead of, a load cell for weighing the bin. In one embodiment, the inspection cell has an image capturing device, such as a camera. In some implementations the camera is positioned to capture an image from above a bin located in the inspection cell. The bins have open tops. A camera positioned above the bin can capture an image of the bin from above. In the image includes the inside of the bin, including the contents of the bin if the bin is loaded.

In some implementations the camera is a digital camera and is configured to send captured image data to a central controller such as the processing system 400. The processing system 400 then processes the image data, discussed more below. In some implementations the camera is configured to capture any of: colour images, black and white images, infra-red images. The images may be still picture images or may be video images. In some implementations, the video images may be sent to the controller for a user to view a live feed from the camera.

The image data captured by the camera is sent to the central controller over a wired or wireless connection, such as Bluetooth ^{™} or WiFi ^{™}. Once the image data has been received at the central controller, it is processed in any of the following ways.

In some implementations, the image captured by the camera is displayed on a display to a user. The user can visually inspect the contents of the bin. The user can determine, and record, if the bin is empty or loaded. The user can visually identify stock and manually record the contents/good in the bin. The user can therefore keep an accurate inventory. If a user needs to locate an object within the storage system, they move a bin to the inspection cell and view an image of the bin provided by the camera in the inspection cell to determine whether the object they are locating is in the bin. This is more efficient than being required to remove the bin from the grid and to physically/manually inspect the contents of the bin. It also provides a more efficient system since less energy is used removing bins from the system to determine the required information, and energy is not wasted on removing bins from the system which do not contain the required goods.

Optionally the user makes a record of the inventory/goods in the bin by inputting the information into the central controller. The controller stores a record to the inventory in a memory. In some implementations the controller is also configured to store the image of the bin.

The user can also inspect the image on the display for debris. In this way, the user can determine whether a bin is clean. If a user determines a bin is unclean, or contains debris such as dirt or broken objects, the bin is removed from the grid. This is done by moving the bin to a port (using a container-handling vehicle). The bin can then be cleaned and any debris can be removed. Once the bin is suitable for use it can be returned to the grid.

The user can inspect the image for any damage to the bin to determine whether any repair of the bin is needed. If it is determined that the bin is broken, damaged, or in need of repair, the bin is removed from the grid. This is done by moving the bin to a port (using a container-handling vehicle). The bin can then be repaired and once the bin is suitable for use it is returned to the grid.

By viewing the interior of the bin in the inspection cell the status of the bin can be determined without needing to remove the bin from the grid, providing a more efficient system. It also supports better maintenance of the system since bins can be removed if they are broken, damaged, unclean or contain debris. This prevents a scenario where a bin is only discovered to be unclear/unfit for use when it is in use, such as being loaded with goods in a port. If damage, dirt or debris is discovered when a bin is being filled with goods, an alternative bin must be found. This increases the length of the loading process and leads to an inefficient system. By having an inspection call within the grid, the condition of the bin can be assessed when the bin is in the grid and not when it is being actively loaded/unloaded. This means a bin can be removed and repaired or cleaned at a time when it is not actively required to be loaded or unloaded, leading to better utilisation of the system and more bins in the system being fit for use.

In other implementations, in addition to or instead of displaying the image on a display, the processing system may process the image. For example, the system may identify objects in the bin using a computer program. Artificial intelligence could be used to identify objects within the image and determine which goods are stored within the bin. Once the goods have been identified the information is stored in a memory on the device. The information can be accessed by a user. The processing system may identify objects in an image by comparing the image to a reference image of a stock item which is stored in a database. If the system finds a match between an object identified in the image and a reference image, it determined that the stock items is located in the bin. This can be done for a number of items identified in the image to compile a list of all stock items located in the bin. The processing system then stores this information in a memory. In some implementations, the information is stored with an identifier associated with the bin. Additionally or alternatively, the processing system displays a list of the stock items identified in the bin to a user via the display.

If no objects are identified in the image, the system determines that the bin is empty. This is referred to as a load status of the bin. This information can be stored in the memory along with an identifier associated with the bin, or can be displayed to a user on the display.

The processing system can additionally or alternatively be used to identify debris in the bin, referred to as a cleanliness status, or damage in or to the bin, referred to as a. This could be done in a number of ways.

In one implementation the processor compares the image of a bin to an image of a clean and undamaged bin, and identifies discrepancies. In some implementations the discrepancies are noted as debris/damage and an alert is sent to a user to indicate a dirty/damaged bin. The user then instructs that the bin is removed from the grid. Alternatively, when the discrepancies are noted as debris/damage, the system creates a command to automatically remove the bin from the system. A container-handling vehicle then moves the bin from the inspection cell to a port.

In other implementations, when the processor compares the image of a bin to an image of a clean and undamaged bin and identifies discrepancies, it is configured to display the image showing the discrepancies to the user on a display. In some implementations only the portion or portions of the image with the discrepancies is shown to the user, in other implementations the entire image is displayed.

Therefore the image data can be displayed to a user and/or processed by the processing system.

Variations can be made to the above system. Multiple cameras could be included in the inspection cell for imaging the bin from different angles. In the above implementations the camera is positioned above the bin and views the bin vertically from above. In other implementations the camera is positioned at the side of the bin, and views the bin horizontally. In this implementation the bin is partially transparent, and the camera views the interior of the bin through the transparent portion of the bin. In other implementations, the majority of the bin is transparent.

As explained above in some implementations the camera is a video camera configured to transmit a live feed of the bin to a user located outside the grid. The user is able to control the camera remotely to move the camera to view different parts of the bin.

For safety and security reasons, the internal portion of the storage and retrieval system is not accessible by users. This includes the grid, the bins within the grid and container-handling vehicles. This provides efficient and secure storage, however can lead to information about the bin contents and the condition of the bins being difficult to access. In known systems, the bins must be moved to an access port, and removed from the grid in order for this information to be obtained. The inspection cell of the present disclosure provides a mechanism for information about the bin to be obtained without the need for the bin to be removed from the system. Therefore the safety and security of the system is maintained whilst providing efficient access to information about the bins. The user is able to see, identify and weight bins within the system itself.

The storage system of the present disclosure includes vertical storage columns in a first zone, and a user area in a second zone. The first zone is not accessible by the user. Therefore the vertical storage columns, and the inspection cell, are in a zone which is not accessible, such as not physically accessible, by the user.

In an implementation, in addition to, or instead of, the inspection cell having a load cell and/or a camera, the inspection cell incudes a scanner. The scanner is configured to scan a code located on the bin. The scanned code can be used to identify the bin. In some implementations, each bin in the storage system has an associated unique identifier which is represented in a code on the bin. This is used to track the bins, including tracking the location of each bin and tracking the contents in each bin. Each bin has a code affixed to the bin. The code may be a bar code or a QR code.

The scanner is located in the inspection cell at a location for scanning a code located on the bin. The bins in the storage system have codes at a given location on each bin. In some examples the bins have a code located on one side. In this case the scanner is positioned in the inspection cell to scan the side a bin in the cell. In other examples, there may be multiple scanners positioned in the inspection cell, each scanner to scan a different side of the bin. In this way, the code on the bin can be scanned regardless of where on the bin the code is positioned, or of the orientation of the bin.

Once the code on the bin is scanned the scanned information is processed to determine the unique identification of the bin. Each bin in the system has a unique identifier for tracking and locating the bin. In this way, stock located in the system in bins can be accessed. The scanner sends the scanned data to a processors which reads the scanned data to determine the identification of the bin.

Once the unique identification of the bin has been determined, this can be used in conjunction with other information determined by the inspection cell. For example, where the inspection cell includes a load cell, the weight of the bin measured in the inspection cell can be stored along with the unique identifier from the bin. This way the weight of the bin can be monitored.

In other implementations, the scanner scans the code and the system identifies the bin. This can be used to confirm the identity of the bin. For example, if a robot is handling a bin but the identity of the bin is unknown, it can be taken to the inspection cell to determine or confirm the bin identity.

In some implementations the processing system has information associated with each unique identifier stored in a database. Once the scanner in the inspection cell is used to determine the identification of the bin, the information relating to that bin is accessed from the database. In some examples the stored information includes a record of the items being stored in the bin. This information can be compared to the information obtained from the inspection cell.

For example, the stock identified through the camera as described above can be compared to a list of the recorded stock associated with the bin stored in the database. This could be done automatically or by a user. For example, when the image of the stock is displayed on screen, as list of stock stored in the database can also be displayed, allowing a user to compare the two. If there is a discrepancy the user or the system updates the record stored on the database to reflect the stock in the bin determined by the camera.

In an implementation, once the bin is scanned and the identity of the bin is determined, the system accesses an expected weight of the bin based on the bin stock stored in the database. The bin is weighted by a load cell in the inspection cell, and the measured weight of the bin is compared to the expected weight as calculated from the database. If there is a discrepancy between the measured weight and the expected weight, action can be taken. For example, if the measured weight differs from the expected weight by more than a threshold amount, it is determined that there is a discrepancy. Once a discrepancy is determined in some examples the system accesses a camera in the inspection cell to image the contents of the inspection cell. The image can be used to identify the contents of the inspection cell as described above. Where the identified contents differ from the contents stored in the database, the database is updated, manually or by a user.

In other examples, once a discrepancy is determined the system can generate a command to move the bin to a port so that the bin can be removed from the grid and the contents can be manually checked. Where the identified contents differ from the contents stored in the database, the database is updated.

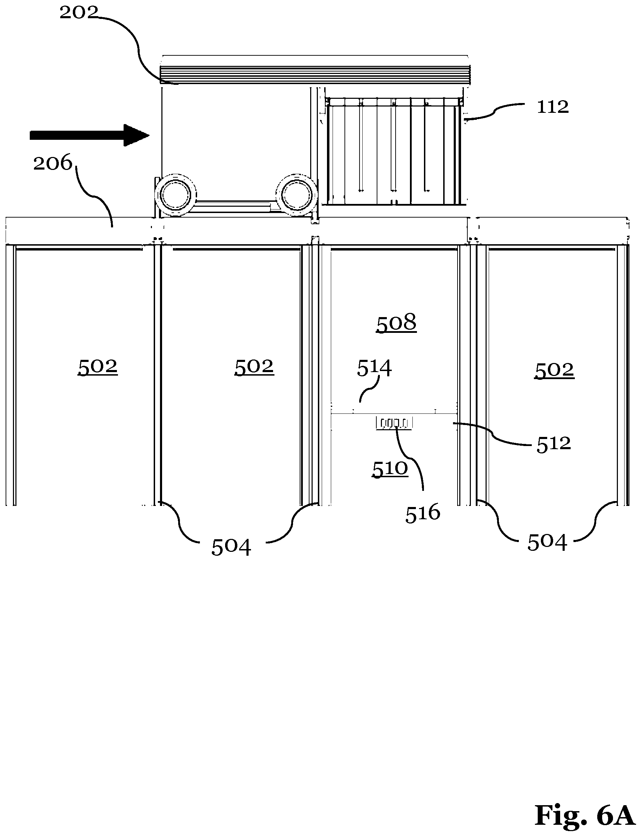

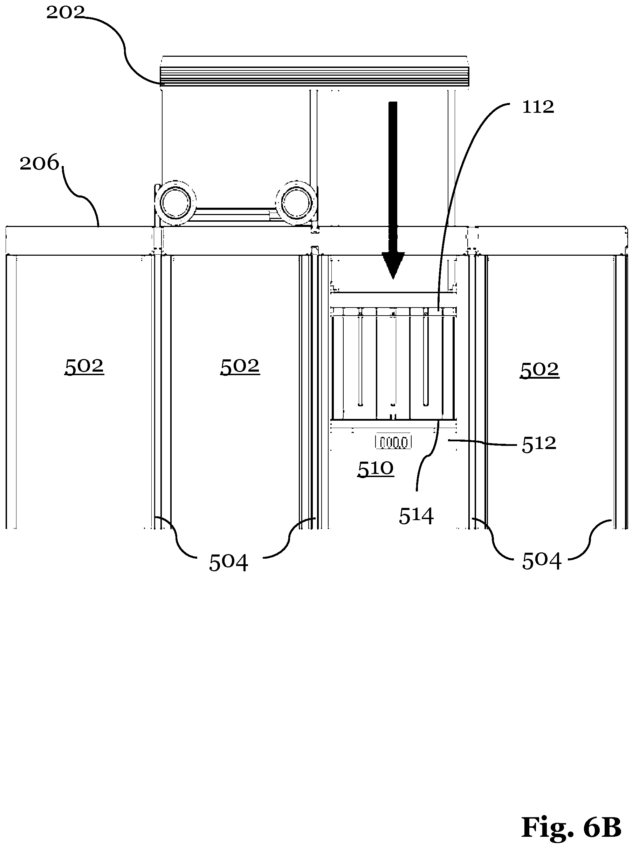

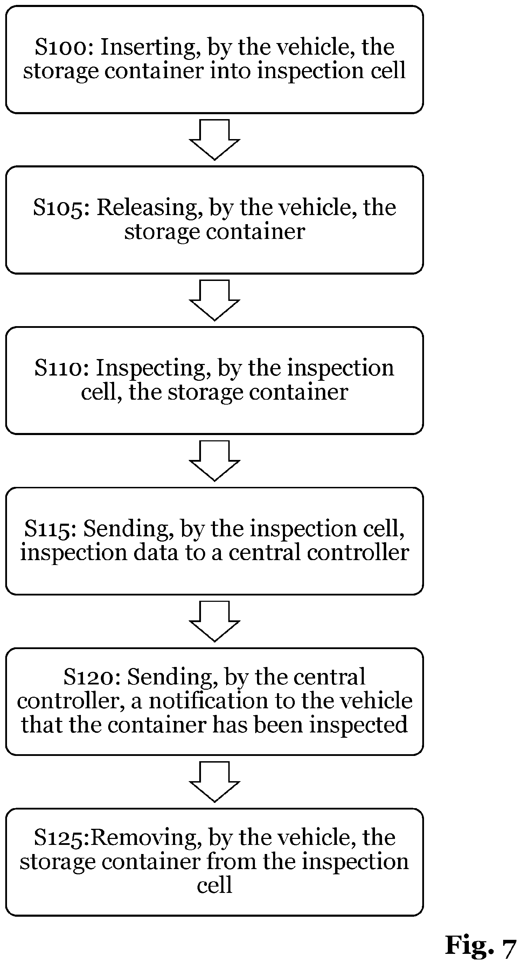

Fig.6A to 6D and Fig. 7 illustrate a method for inspecting a storage container in an inspection cell in the grid.

A robot 202 travels along rails 206 of a rail system to move a bin 112 storing stock items around the grid. The robot 202 travels in the X and Y directions along the rail system to approach a vertical column 510 comprising an inspection cell 508. The movement of the robot 202 is indicated by the arrow.

Once the robot 202 is positioned such that the bin 112 is above the access opening to the vertical storage column 510, the robot 202 lowers the bin 112 into the inspection cell 508. This is S100 in Fig. 7. In some implementations the robot 202 uses a gripping device to lower the bin 112 into the inspection cell 508. The inspection cell 508 has means for obtaining data from the bin.

The robot 202 lowers the bin 112 into the inspection cell 510 until the bin 112 is resting on the shelf 512. The shelf 512 then supports the weight of the bin.

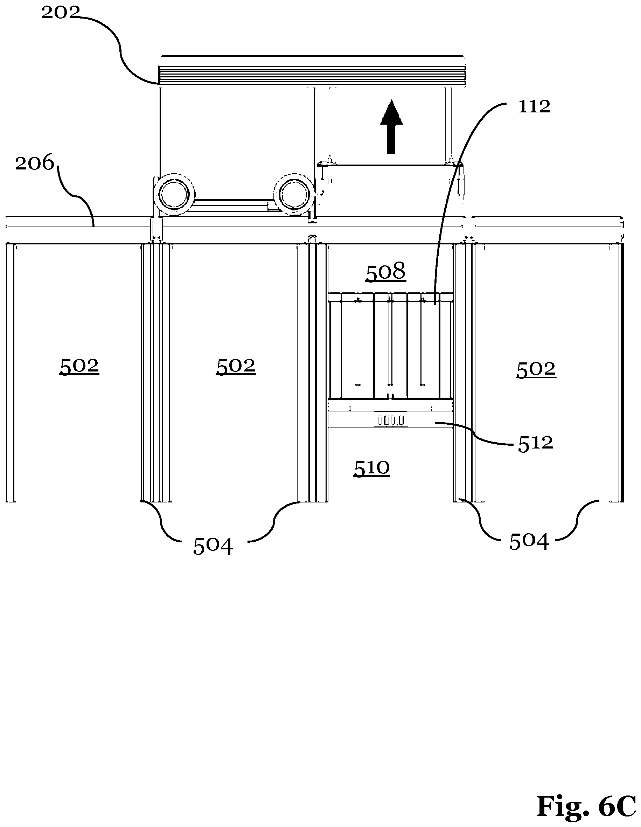

Once the bin 112 is in the inspection cell, the robot 202 releases the bin in step S105. In some implementations the robot releases the gripping device and raises the gripping device back up to the level of the robot. Fig. 6C shows the robot releasing the bin and the gripping device returning to the level of the robot (shown by the arrow).

In implementations where the bin is weighed by the inspection cell it is beneficial for the robot to release the bin so that no components of the robot are resting on the shelf or bin, therefore to ensure the robot components do not contribute to the weight on the load cell. This helps to provide an provide an accurate reading of the weight of the bin. It is not always essential however to release the bin from the robot. Therefore step S105 is not always included.

When the bin 112 is located in the inspection cell 508 the bin is inspected. Inspecting the bin at S110 in Fig. 7 includes obtaining data relating to the bin. This could be done through a number of means which are discussed above. For example, the inspection cell includes one or more of: a load cell for measuring the weight of the bin; a camera for capturing an image of the bin, and a scanner for scanning in identifier on the bin.

Once the inspection cell 508 has obtained data relating to the bin, it sends the data to a central controller such as processing system 400. The inspection cell includes means for sending data to the processing system. The data can be sent via a wired or wireless connection, such as Bluetooth or Wifi. Sending the data obtained from the bin to central controller is shown in S115.

Once the data has been received from the inspection cell, the processing system 400 processes the data to determine information about the bin. This is described above.

Once the data has been received by the processing system, and optionally once the data has been processed by the processing system to determine information about the bin, the processing system sends a notification to the robot 202 that the inspection has been completed S120. Once the robot received the notification, it removes the storage bin from the inspection cell S125.

In other implementations, instead of the robot 202 waiting to receive a notification from the processing system 400 that the inspection has been completed, the robot waits a predetermined amount of time and then removes the bin. For example, the robot may be programmed to wait for 60 seconds after releasing the bin for the data to be obtained, after which time it removes the bin from the inspection cell.

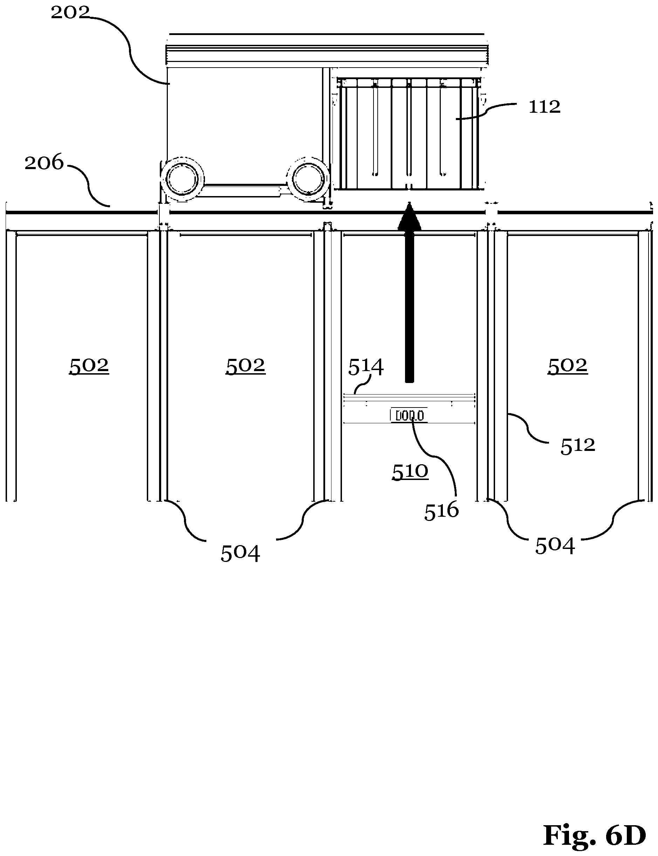

Fig. 6D shows the bin 112 being raised from the inspection cell 508 to the robot 202. The movement of the bin is shown by the arrow. Once the bin is raised completely to the level of the robot, the robot moves away from the inspection cell along the rails to take the bin to the next destination. This may be to a vertical column for staking or to a port for leaving the grid.

### Penultimate comments

Some implementations are set out below. There is provided a method for determining the contents in a storage container in a storage grid, the method comprising: receiving a measured weight of the storage container from an in-grid inspection cell; determining an expected weight of the container by: accessing, from a database, the recorded items in the container, and the recorded weights of the items; and determining, from the recorded items in the container, and the recorded weights of the items, an expected weight of the storage container; comparing the measured weight to the expected weight; and if the measured weight is not within a threshold value of the expected weight, outputting an indication that the container is not loaded as expected.
Outputting the indication may comprise displaying a message to a user that the container is not loaded as expected. Outputting the indication may additionally or alternatively comprise instructing a container-handling vehicle to move the container to a port for removal from the grid. Outputting the indication may additionally or alternatively comprise instructing a camera in the inspection cell to capture an image for the container.
There is provided a method for determining the contents in a storage container in a storage grid, the method comprising: receiving an image from an in-grid inspection cell; identifying objects within the image; comparing the identified objects to images of stoke items in a database; identifying stoke objects in the storage container based on the comparison, and outputting an indication of the identified objects.
There is provided a method for determining the contents in a storage container in a storage grid, the method comprising: receiving a scan of an identification code on a bin in an in-grid cell; receiving data on the bin from the in-grid cell, the data comprising an image or a weight of the bin from the in-grid cell; determine a unique identifier of the bin using the scanned code; accessing information relating to the unique identifier from a database; comparing the accessed information to the received data; and, based on the comparison, determining that there is a discrepancy. Optionally, if it is determined that there is a discrepancy, the method includes updating the database based on the data received from the in grid cell.
There is also provided computer readable medium comprising instructions which, when executed by a processor, cause the processor to perform any of the above methods.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage system for storing storage containers, the storage system comprising:
a plurality of vertical storage columns, each vertical storage column configured to accommodate a plurality of storage containers in a vertical stack;
a horizontal rail system arranged above the vertical storage columns, configured to support a vehicle to travel on the rail system to insert and remove storage containers from the vertical storage columns; and
an inspection cell located in a vertical storage column and configured to obtain inspection data from a storage container positioned in the inspection cell.

2. The storage system according any preceding claim, wherein inspection cell is located towards the upper end of the vertical storage column.

3. The storage system according to any preceding claim, further comprising at least one storage container, and wherein the inspection cell comprises a shelf located below the horizontal rail system by a distance less than twice the height of the storage container.

4. The storage system according to any preceding claim, wherein the inspection cell comprises at least one of:
a load cell configured to register the weight of a storage container positioned in the inspection cell;
a camera configured to image a storage container located in the inspection cell; and
a scanner configured to scan a barcode of a storage container in the inspection cell.

5. The storage system according to any preceding claim, wherein the inspection cell is located in an area which is not accessible by a user.

6. The storage system of any preceding claim, further comprising a vehicle configured to travel on the rail system and to insert and remove storage containers from the vertical storage columns, wherein the vehicle is configured to:
insert a storage container into the inspection cell;
release the storage container;
wait for the inspection cell to obtain inspection data from the storage container; and
remove the storage container from the inspection cell.

7. The storage system of claim 6, wherein the vehicle is further configured to:
receive an indication from a central server that the container has been inspected; and
after the indication has been received, remove the storage container from the inspection cell.

8. The storage system according to any preceding claim, wherein the inspection cell is configured to transmit the obtained inspection data to a central controller via a wired or wireless connection.

9. The storage system according to any preceding claim, further comprising a central controller configured to receive information from the inspection cell and to store the received information.

10. The storage system according to claim 9, wherein either:
the inspection cell is configured to capture an image of the storage container and the central controller is configured to do at least one of:
determine a load status of the storage container;
identify the contents of the storage container;
display the image on a display; and
determine a cleanliness status or operating status of the storage container by analysing the image for debris; or
the inspection cell is configured to scan a barcode on the storage container, and the central controller is further configured to identify the storge container using the scanned barcode.

11. The storage system according to claim 10, wherein the central controller is configured to send and instruction to remove the storage container from the storage system based on the determined cleanliness status or operating status.

12. A method of inspecting a storage container in the storage system of any preceding claim, the method comprising:
inserting, by a vehicle, a storage container into an inspection cell located in a vertical storage column;
releasing, by the vehicle, the storage container;
inspecting, by the inspection cell, the storage container; and
removing, by the vehicle, the storage container from the inspection cell.

13. The method of claim 12, wherein inserting the storage container into the inspection cell comprises vertically lowering the storage container into the inspection cell, and wherein removing the storage container from the inspection cell comprises vertically raising the storage container from inspection cell.

14. The method of claim 12 or claim 13, wherein inspecting the storage container comprises at least one of weighing the storage container and scanning a bar code of the storage container.

15. The method of any of claims 12 to 14, wherein inspecting the storage container comprises capturing an image of the storage container, and wherein the method further comprises at least one of:
analysing the captured image to determine a load status of the storage container;
determining the contents of the storage container from the image; and
analysing the image for debris.
